(19) Europäisches Patentamt
European Patent Office
Office européen des brevets

(11) **EP 1 072 879 B1**

(12) **EUROPEAN PATENT SPECIFICATION**

(45) Date of publication and mention
of the grant of the patent:
**22.12.2004 Bulletin 2004/52**

(51) Int Cl.$^7$: **G01N 11/04**, G01N 11/06,
G01N 33/49, G01N 33/487

(21) Application number: **00115898.9**

(22) Date of filing: **25.07.2000**

(54) **Method and equipment for the determination of general and capillary viscosity of blood**

Verfahren und Vorrichtung zur Bestimmung der allgemeinen und der kapillaren Blutviskosität

Procédé et dispositif pour la détermination de la viscosité générale et capillaire du sang

(84) Designated Contracting States:
**DE FR GB**

(30) Priority: **26.07.1999 IT MI991640**

(43) Date of publication of application:
**31.01.2001 Bulletin 2001/05**

(73) Proprietors:
• **Cortinovis, Alvise**
**24100 Bergamo (IT)**
• **Crippa, Alda**
**37100 Pavia (IT)**

(72) Inventors:
• **Cortinovis, Alvise**
**24100 Bergamo (IT)**
• **Crippa, Alda**
**37100 Pavia (IT)**

(74) Representative: **Gervasi, Gemma, Dr.**
**Notarbartolo & Gervasi S.p.A.,**
**Corso di Porta Vittoria, 9**
**20122 Milano (IT)**

(56) References cited:
WO-A-84/00003      DE-A- 3 138 514
DE-A- 4 440 383     FR-A- 2 431 129
GB-A- 2 175 691     US-A- 3 699 804
US-A- 3 864 962     US-A- 4 348 890
US-A- 4 491 012

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 072 879 B1

**Description**

PRIOR ART

Methods and equipments for the determination of the hematic viscosity have not obtained yet an adequate diffusion in the clinical field owing to the execution difficulty and the excessive cost of the proposed equipments. Moreover several unsolved problems still exist, related to the physical and biological characteristics of blood, particularly for the difficulty of reproducing in vitro the very numerous dynamic variables existing in vivo in the intravascular environment.

Studies about the viscosity of fluids have been carried out applying the Poiseuille formula to the Ostwald viscometers, consisting of a single circular section capillary tubular system, submitted to a determined pressure gradient: the fluid volume passing in a time unit is inversely proportional to the fluid viscosity. Ostwald method allows the measurement of viscosity for Newtonian fluids such as water, serum or plasma but not for blood which is not a Newtonian fluid. The Newtonian fluids show a homogeneous and constant viscosity in every point while blood, shows a not homogeneous viscosity, tending to increase going from the paries toward the center of the vessel, because the red blood cells tend to gather along the vessel axis pushed by pressure, and moreover a viscosity which changes varying the flux velocity.

Newton formula, expressing the viscosity as the ratio between shear-stress (shear-stress, expressed in dyne/$cm^2$) and shear-rate (shear-rate ratio between velocity and diameter of the conduit, expressed in $sec^{-1}$), allows to obtain the viscosity, either imposing a determined velocity and getting the shear-stress necessary to maintain the decided velocity, or imposing the shear-stress and getting the slip velocity and, according to the diameter of the conduit, the shear-rate (PHILLIPS M.J., HARKNESS J. Plasma and Whole Blood Viscosity. Br. J. Hemat. 1976, 34: 347-350).

From such differentiation two series of equipments derived to measure the viscosity: 1) sliding surface viscometers, such as the torque-type viscometers; 2) tubular viscometers. The purpose of both equipments is to measure the viscosity at any shear-rate which one may find in the cardiocirculatory system in basal conditions and in systole and diastole extreme conditions and rest and maximum muscular activity.

From calculation and experimentation turn out that the shear-rates in the vascular system lie in the range between 1 and 400 $sec^{-1}$ (Table I)

TABLE I. Hematodynamic Parameters Obtained by Calculation (Min° - Max°° Values) and Experimentally (Diast-Syst Values)

| VESSELS | DIAMETER cm | SECTION cm² | NUMBER OF VESSELS | EQUIVALENT DIAMETER cm | COMPUTED VELOCITY** cm/sec | COMPUTED SHEAR-RATE 1/cm | EXPERIMENTAL VELOCITY* cm/sec | EXPERIMENTAL SHEAR-RATE 1/sec |
|---|---|---|---|---|---|---|---|---|
| AORTA | 2.5-2.3 | 4.5 | 1 | 2.4 | min 14.25 mean 20.3 max 162 | min 5.7 mean 8.12 max 65.18 | diast 0 mean 25 syst 112-75 | diast 0 mean 16.6 syst 44.8-34 |
| ARTERIAE | 0.4 | 20 | 160 | 0.4 | min 3.2 mean 4.58 max 36.665 | min 8 mean 49.8 max 91.6 | diast 1 mean 12 syst 52 | diast 2.5 mean 66.2 syst 130 |
| ARTERIOLAE | 0.005-0.0025 | 400 | 56617126 | 0.003 | min 0.16 mean 0.029 max 1.833 | min 53.4 mean 332 max 611 | mean 1.4-0.9 | mean 360-280 |
| CAPILLARIES | 0.0006-0.0008 | 4500 | 15957446000 | 0.0006 | min 0.014 mean 0.02 max 0.16 | min 23.76 mean 32.92 max 271 | mean 0.07 | mean 87.5 |
| VENULAE | 0.0025-0.007 | 4000 | 1273885350 | 0.002 | min 0.016 mean 0.0229 max 0.183 | min 8.02 mean 11.46 max 91.66 | mean 0.03-0.9 | mean 120-128 |
| VENAE | 0.5-0.6 | 40 | 203 | 0.5 | min 1.604 mean 2.29 max 18.33 | min 3.2 mean 4.58 max 36.66 | mean 4.2 | mean 7 |
| CAVAE | 3 | 14 | 2 | 3 | min 3.56 mean 5.08 max 40.73 | min 1.18 mean 1.69 max 13.57 | diast 23-46 mean 9-21 syst 0 | diast 7.6-15.3 mean 3-7 syst 0 |

° in sitting position (- 30% of the flow rate)

°° in conditions of maximum muscular work (+ 700% of the flow rate)

* the experimentally obtained mean velocities are get by a weighted, not arithmetic mean

** the computed mean velocity values refer to the flow rate in rest conditions and not to the mean between the maximum and the minimum flow rate

EP 1 072 879 B1

In the torque-type viscometers, the different shear-rates are obtained suitably modifying the slip velocity and the distance between the slip surfaces.

In the tubular viscometers, the different shear-rates are obtained modifying the shear-stress and the slip pressure and the section of the conduit.

Both systems have some limitations in experimentally reaching the low shear-rates; whereby from two or more determinations the other viscosities have been obtained by extrapolation.

Both systems are able to estimate the general hematic viscosity at different shear-rates, but the problem arises at very little diameter level, to the order of 5 μ such as those found near the capillary region. In fact the blood is a corpusculated liquid containing cells having a diameter (6-10 μ) higher than the capillary one. The red cell in order to pass through a capillary must modify its shape of biconcave disc, whereby at this level the blood viscosity increases, because not only the plasmatic and plasmatic-corpuscular component exist, but mainly the corpuscular one with the internal viscosity and the membrane viscoelasticity (DINTENFASS L. Consideration on the Internal Viscosity of Red Cells and Its Effect on the Viscosity of Whole Blood. Angiology 1962, 13: 333). The passage through the capillaries then depends on the deformation capacity of the red cell or erythrocyte deformability. For the determination of the blood viscosity and the erythrocyte deformability a sufficiently reliable and economic method to apply in the usual clinical tests notwithstanding the remarkable relevance of said characteristics compared with the high incidence of the thromboembolic risk pathologies has not been found yet.

SUMMARY

Now we have found a method and an equipment which allow solving the problems of the prior art.

The method is based on the determination of the viscosity of blood with respect to the viscosity of water by measurement of the times of passage of said liquids through multipore filters under suitable pressure.

By the method according to the present invention as defined in independent claims 1, 2 and 5, in particular the following characteristics are determined:

- general hematic viscosity, i.e. the overall viscosity of blood in the circulatory system;
- capillary hematic viscosity, i.e. the viscosity of blood in the capillary region;
- erythrocyte deformability defined as percent ratio between general hematic viscosity and capillary hematic viscosity;
- erythrosedimentation velocity (V. E. S.) referred to the viscosity of water.

The equipment essentially consists of the following components:

- a multipore filter with pores having a diameter ranging from 12 to 16 μ for the determination of the general hematic viscosity;
- a multipore filter with pores having a diameter ranging from 4 to 6 μ for the determination of the capillary viscosity;
- a syringe to feed the fluid to examine to the filter, blood or plasma or water;
- a glass burette connected downstream of said filter, on the wall of which three electrodes are inserted at a distance one from the other allowing to accumulate a known volume of filtered fluid in the burette segment between an electrode and the subsequent one;
- a water manometer connected upstream of said filter suited to exert a suitable negative pressure on the fluid to be filtered for the determination of the viscosity;
- a current amplifier connected to said electrodes which allows to determine the time during which the fluid front passes from an electrode to the subsequent one and then to measure the time of passage of the fluid through the filter.

The viscosity is computed on the basis of the expression:

$$\eta = \eta_S/\eta_H = t_S/t_H$$

wherein $\eta_S$ is the blood viscosity,
$\eta_H$ is the water viscosity,
$t_S$ is the time of passage of blood through the filter and
$t_H$ is the time of passage of water through the filter.

## DETAILED DESCRIPTION OF THE INVENTION

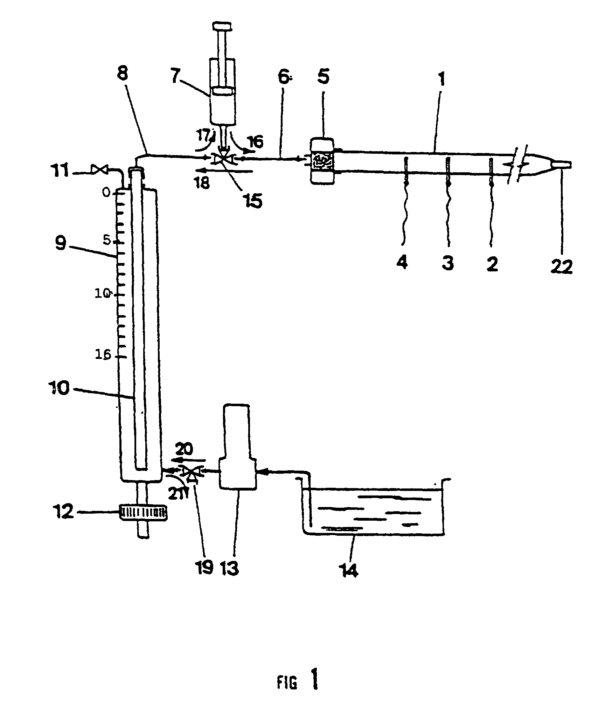

The equipment for the determination of the viscosity of blood with respect to the viscosity of water according to the present invention consists of a hydraulic part, represented in Figure 1, and of an electronic part (microprocessor) for measurement, calculation and printing, built according to known techniques.

By the hydraulic part the data (filtration times) for the viscosity calculation are acquired, while by the electronic part said data are processed on the basis of the equations reported below.

The hydraulic part essentially consists of:

- a graduated pipette (1),
- a filter-holder with relative filter (5),
- a syringe (7),
- a water manometer consisting of two coaxial tubes (9) and (10),
- a pump (13),
- a water container (14).

Said pipette (1) has an internal diameter equal to 3.9 mm and a length equal to 20 cm and it is open at one end (22) while at the other end it is connected to the filter (5).

In the burette three platinum or gold-plated copper electrodes are inserted, (2), (3) and (4) respectively, inserted at a distance one from the other in such a way that the volume contained between one and the other one is 0.3 ml.

The three electrodes are connected to a current amplifier and this one is connected to a microprocessor.

The filter (5) consists of a polycarbonate porous septum. For the experimentation filters bought from Nucleopore Corporation (California) Society having the number 94 566-32944 with 14 μ and 5 μ pores respectively, have been used.

Said filter is connected, by a pipe (6) to a three way valve (15).

Said valve (15), by the direction (16) connects the syringe (7) to the pipe (6), to the filter (5) and to the burette (1); by the direction (17) it connects the syringe (7) to the flexible pipe (8) and to the manometer (9) and (10) and by the direction (18) it connects the pipe (6), the filter (5) and the burette (1) to the pipe (8) and to the manometer (9) and (10).

The valve (19) in the direction (20) connects the pump (13) and the container (14) to the manometer (9) and (10) and in the direction (21) it allows to drain the water from the manometer itself.

For the execution of the measurements, the following operations are carried out:

### 1. BLOOD SAMPLES COLLECTION

1.1 Taking a sample (6ml) of venous blood, avoiding prolonged stasis.
1.2 Distributing the blood in 2 test tubes (3 ml) containing EDTA-K3.
1.3 Gently remixing.
1.4 Keeping the two test tubes in a thermostat at 37 °C.
1.5 Instrumental execution within 60 minutes.

### 2. EQUIPMENT CALIBRATION

2.1 Filling the reservoir (14) with water.
2.2 Opening the valve (11); setting the valve (19) in the direction (20) and by the pump (13) the manometer (9) is filled with water.
2.3 Inserting a syringe (7) into the three-way valve (15) and sucking water for filling the internal tube (19) of the manometer to the valve (15).
2.4 Inserting into the three-way valve (15) a filter-holder (5) with pipette (1) horizontally located and introducing water to half between the two electrodes (2) and (3).
2.5 Setting the 0 of the scale located on the external pipe (9), at the same height of the pipette, by the adjustable height holder (12) of the manometer by a micrometer screw.
2.6 Turning the three-way valve (15) in order to connect the manometer (9) to the graduated pipette (1).
2.7 Acting on the worm screw (12), raising or lowering the manometer (9) to reach the zero flux condition into the pipette (1) (absence of movement of the water column).

3. INSTRUMENTAL EXECUTION

3.1 Inserting a filter having 5 μ diameter pores (Nucleopore) into the filter-holder (5).
3.2 Inserting a pipette (1) into the filter-holder (5) already prepared with μ pore filter.
3.3 Inserting the filter-holder into the pipe fitting (6) in parallel to the three-way valve (15) (1/4 of turn).
3.4 Inserting a syringe (7) containing 3 ml of blood into the connection of the three-way valve (vertical position).
3.5 Taking the water level inside the manometer (9) to 16 cm, thus realizing a pressure equal to 16 cm $H_2O$.
3.6 Pressing on the syringe (7) in direction (16), in order to make the blood sufficient to cover the last electrode (2) (about 1 ml) flowing into the pipette (1).
3.7 Rotating the three-way valve (15) in such a way that the pipette (1) be connected to the manometer (9-10) (direction 18): the blood starts draining into the union pipe (6-8) between manometer (9-10) and filter-holder (5).
3.8 When the blood passes beyond the first electrode (2) the counting of time in seconds begins.
3.9 When the blood passes beyond the last electrode (4) the counting of seconds ends.
3.10 Rotating the three-way valve (15) in the direction (16).
3.11 Storing the obtained filtration time.
3.12 Repeating from 3.5 to 3.11 taking the pressure in the manometer (9-10) to 13 cm $H_2O$.
3.13 Repeating from 3.5 to 3.11 taking the pressure in the manometer to 10 cm $H_2O$.
3.14 With the three-way valve (15), with direction (16), dismounting the filter-holder (5) and the pipette (1).
3.15 Inserting a 10 ml syringe (7) into the pipe fitting of the three way valve (15), with direction (17), and draining away 10 ml of water from the manometer (9-10) (the blood sample passed in the tube fitting is entirely removed).
3.16 Repeating from 3.2 to 3.15 with a 14 μ diameter pore filter, changing, by turn, the pressures in the manometer, which are 8-5-2 cm $H_2O$ respectively.

The microprocessor is able to store the times of passage of the liquid under examination, blood or water, to compare one against the other, to get the viscosity values, to create the power function whereby to compute the viscosity values at any shear-rate included in the cardiocirculatory system, to obtain the logarithmic function and the a and b values as defined below.

A printer connected to the microprocessor stores the values of the general hematic viscosity (obtained from the measurements with the filter having pores of 14 μ diameter), the values of the capillary hematic viscosity (obtained from the measurements with the filter having pores of 5 μ diameter) and the values of the erythrocyte deformability defined as the percent ratio between the general hematic viscosity and the capillary hematic viscosity and the erythrocyte aggregation index.

It is possible to print also the power curve of the trend of viscosity and deformability at the various shear-rates.

The method according to the present invention has the advantage to determine the viscosity in a system which gets near as much as possible to the vascular one, characterized by a principal vessel having several branches of decreasing diameter to the capillaries.

The method for the determination of the blood viscosity according to the present invention is based on the measurement of the blood filtration time through a multipore filter compared to the water filtration time through the same filter.

In general for the calculation of the viscosity of a fluid one uses the Newton formula, expressed by the relation: $\eta = T/S \mid w/d$.

In the determination of the viscosity with the filtration method using multipore filters, in the formula one cannot consider the diameter of the filter, but one has to introduce the concept of equivalent diameter, defined as the ratio between 4 times the passage area of the liquid A and the overall wet perimeter (Pw): Deq = 4A/Pw. Newton formula thus becomes: $\eta = T/S \mid w/Deq$ also expressed as: $\eta = T/S \mid w/(4A/Pw)$.

In a unique vascular system or in a unipore vascular system, the equivalent diameter is equal to the vessel diameter itself:

$$Deq = 4A/Pw = 4\pi r^2/2\pi r = 2r = D.$$

In a branched vascular system or in a filtration system with multipore filters, the equivalent diameter is lower than diameter of the overall section of the vascular region or the filtering surface. In fact, if one considers a vessel having equal section but with a diaphragm in the middle:

$$Deq = 4A/Pw = 4\pi r^2/(2\pi r + 4r) = 4\pi r^2/2r(\pi+2) < D.$$

Considering, then, a vascular system having a number n of vessels or a filtration system having n pores, the equivalent diameter corresponds to the diameter of a single vessel of pore having equal size of the filtering surface: $Deq = 4A/Pw = 4\pi r^2 n/2\pi rn = 2r = d$
wherein:

A =      filtration surface;
Pw =    overall wet perimeter;
r =       single pore radius;
n =       pore number;
d =       single pore diameter.

Therefore, for the viscosity calculation, applying the Newton formula and substituting the equivalent diameter of the filtering surface with the diameter of a single pore, one has:

$$\eta = T/S \mid w/D = T/S \mid w/Deq = T/S \mid w/d.$$

For the determinations according to the present invention the diameter of the single pore is selected in the range between 12 and 16 $\mu$ (0.0012 and 0.0016 cm) for the determination of the general viscosity of blood and in the range between 4 and 6 $\mu$ (0.0004 and 0.0006 cm) for the determination of the capillary viscosity of blood.
Expressing the velocity as flow rate or filtered quantity (Q) in the time unit (t) on the filtering section or surface (S), the formula becomes:

$$\eta = T/S \mid (Q/ts)/d = T/S \mid Q/(tsd).$$

Substituting the tangential force T/S with the radial one $P(r_0/s)$, according to Laplace formula $\sigma_t = P(r_0/s)$, the formula becomes:

$$\eta = P(r_0/s) \mid Q/(tsd)$$

wherein:

P =      pressure
s =      thickness of the vessel or filter wall;
$r_0$ =      vessel or filter radius.

As unit for pressure it is convenient to refer to dyne/cm$^2$, or better to its centesimal fraction, so that the viscosity is expressed in centipoise. The units of the other parameters are centimeter (cm) and second (sec) as in the C.G.S. system.
The choice of centipoise as unit is to relate with the viscosity of water, which is assumed to be equal to 1 centipoise.
Then in order to take back the absolute viscosity of blood or plasma to the viscosity of blood or plasma relative to water, a correction factor is needed to be introduced, which allows to bring back the viscosity of water to 1 centipoise, seen the determination error inherent to the measurement equipment. Such correction factor is obtained setting the ratio between shear-stress and shear-rate of water equal to 1.
In practice, being the ratio $r_0$/s difficult to determine experimentally, it is obtained including the correction factor too.
The latter is then introduced in the calculation of the shear-stress of blood or plasma.
The determination of the viscosity of blood or plasma is carried out at three different pressures to which three different shear-rates correspond.
On the basis of the different shear-stresses and respective shear-rates, one creates a diagram which is represented by a power trend curve, having the general formula:

$$y = a\, x^b$$

wherefrom, applying to both sides the logarithmic function, one gets:

$$\log y = b \log x + \log a$$

representing the function of a straight line, allowing to normalize the exponential curve, where y expresses the shear-stress and x the shear-rate.

The b parameter is the slope of the line, which expresses the inclination of the line itself.

The a parameter represents the shift of the line on the axis of ordinates.

The two parameters, compared with the normality ones, allow getting some overall estimations of the changes of the shear-rates with respect to the shear-stress. In particular if the shear-rate is equal to 1, the expression becomes:

$$\log y = \log a$$

then:

$$y = a$$

wherefrom, one may consider a as the force needed to impart the movement in a filtration process.

Such process begins only when the cell components are partially disaggregated going through filters having pores of 12-16 μm diameter (greater than the diameter of the red cells) and completely disaggregated using filters having pores of 4-6 μm diameter (lower than the diameter of the red cells). Therefore, in the second case, one may assume the a parameter as erythrocyte aggregation index.

Computed the three viscosities on the basis of the ratio between shear-stress and shear-rate, one may create the power curve expression of the ratio existing between viscosity and shear-rate; they are between them inversely proportional and, therefore, one will obtain a function of the kind:

$$y = ax^{-b}.$$

The choice of the values of shear-rate and relative viscosities to be considered is referred to the shear-rates obtained experimentally and by calculation in the maximum and minimum flux conditions and for the arterious vessels in systole and diastole conditions. It comes out that the value of the shear-rates to consider are ranging between a minimum equal to 1 sec$^{-1}$ and a maximum equal to 450 sec$^{-1}$.

In practice one acts taking the ratio between the absolute viscosity of blood or plasma and the viscosity of water. Setting since the beginning that the error of the determinations of blood or plasma and the water one are equal, the ratio reduces to the one between filtration time of blood or plasma and filtration time of water.

Multiplying the so obtained viscosity of blood or plasma times the respective shear-rate, one goes back to the shear-stress and in such a way it is possible to find out the trend of the ratio between shear-stress and shear-rate at any shear-rate of the vascular system and to obtain the erythrocyte aggregation index.

ERYTHROCYTE DEFORMABILITY

The erythrocyte deformability has been defined as the capacity of the red cell, subjected to a force, to modify its own spatial configuration; the blood amount passing through filters having pores of diameter lower than the erythrocyte one in a time unit, under constant pressure, has been defined as deformability index (CORTINOVIS A., CRIPPA A., SANTORO E., NOBILI D., PEDRONI G. Variations of the Plasmatic and Hematic Viscosity and of Erythrocyte Deformability and Aggregation in Presence of Various Anticoagulant Solutions. Medical Praxis 1984, 5 (2): 1-21). The choice of filters having pore diameter of two different size, for the determination of the erythrocyte deformability, arises from the need to consider two precise components in determining the resistances to the flux.

The filter having 12-16 μm pores allows the passage of plasma and corpusculate elements without affecting their subcell structures, while the erythrocyte aggregates filter more or less quickly in proportion to the size and the reversibility of the phenomenon before disaggregating forces (pressure).

The filter having 4-6 μm pores lets freely pass the plasmatic components, while the erythrocytes pass thanks to their deformability, seen that their diameter is to the order of 6-8 μm.

The ratio between viscosity with 12-16 μm filter and viscosity with 4-6 μm filter allows excluding the resistances due to the plasmatic components and to the corpuscolate components regardless of their structures.

In the 4-6 μm filters the viscosity becomes equal to the 12-16 μm filters one when the red cells become so deformable as to oppose a resistance to the flux equal to that one exerted by blood through pores of size greater than the red cell one.

The ratio between the two estimated viscosities at a shear-rate of the same order gives a determination of the viscous characteristics of erythrocytes excluding the influence of the plasmatic and plasmatic-erythrocyte components.

Therefore the percent ratio between the viscosity obtained with a filter having 12-16 μm pores and the viscosity obtained with a filter having 4-6 μm pores may be assumed as expression of the erythrocyte deformability.

PROCEDURE FOR THE DETERMINATION OF THE CORRECTION FACTORS (CF) OF THE VISCOSITY OF WATER AT 2, 5 AND 8 cm $H_2O$ PRESSURES

This procedure has been carried out with the purpose to obtain the correction factors (CF) at the three above reported pressures, needed to bring back the viscosity of water to 1 centipoise (cp).

These CF are then introduced in the shear-stress of blood in a way such that the viscosity of blood is referred to the viscosity of water set equal to 1 cp.

A filter having the following characteristics has been used:

■    filter consisting of a polycarbonate porous septum supplied by Nucleopore Corporation (California) Society.
■    Diameter of the pores: 14 μ = 0,0014 cm
■    Filtration surface: 0.20411118 cm$^2$.

The filtration has been carried out in the following conditions:

■    volume of filtered blood: 0.3 ml (corresponding to the passage of blood from one electrode to the subsequent electrode in the graduated burette);
■    filtration pressure:
    three experiments have been carried out, respectively at a pressure:

•    2 cm $H_2O$ = 2 x 98063.8 dyne/cm$^2$
•    5 cm $H_2O$ = 5 x 98063.8 dyne/cm$^2$
•    8 cm $H_2O$ = 8 x 98063.8 dyne/cm$^2$

From the three experiments the following filtration times have been obtained:

| Pressure (cm $H_2O$) | Filtration Times of 0.3 ml of Water (sec) |
|---|---|
| 2 | $t_{1H}$ = 2.081 |
| 5 | $t_{2H}$ = 1.046 |
| 8 | $t_{3H}$ = 0.735 |

Applying Newton formula the respective shear-stresses and shear-rates may be computed.

For the calculations the viscosity of water is considered equal to 1 centipoise and Newton formula is applied using the centipoise as unit, corresponding to a hundredth of dyne.sec/cm$^2$.

Since 1 cm $H_2O$ corresponds to 980.638 dyne/cm$^2$, 1 cm $H_2O$ corresponds to 98063.8 hundredths of dyne/cm$^2$. Therefore for the pressure of 2 cm $H_2O$:

$$\frac{2 \times 98063.8 \times r_0/s}{0.3/2.081 \times 0.204118 \times 0.0014} = 1$$

wherein:

$r_0/s$ = ratio between filtration radius and surface;
2 = pressure in cm $H_2O$;
0.3 = filtered amount in ml;
2.081 = filtration time in sec;
0.0014 = equivalent diameter in cm.

The correction factor (CF) which will be useful to bring back the hematic viscosity from the absolute values to the values relative to water, set equal to 1 centipoise, is obtained. Such factor includes the $r_0/s$ coefficient of difficult determination:

$$CF \times r_0/s = 0.3/2.081 \times 0.204118 \times 0.0014 \times 2 \times 98063.8 = 0.0025721785.$$

For the pressure of 5 cm $H_2O$:

$$\frac{5 \times 98063.8 \times r_0/s}{0.3/1.046 \times 0.204118 \times 0.0014} = 1$$

wherefrom:

$$CF \times r_0/s = 0.3/1.046 \times 0.204118 \times 0.0014 \times 5 \times 98063.8 = 0.002046923.$$

For the pressure of 8 cm $H_2O$:

$$\frac{8 \times 98063.8 \times r_0/s}{0.3/0.735 \times 0.204118 \times 0.0014} = 1$$

wherefrom:

$$CF \times r_0/s = 0.3/0.735 \times 0.204118 \times 0.0014 \times 8 \times 98063.8 = 0.0018206475.$$

One finds, therefore that the error in the measurement of the viscosity of water at the different pressures is ranging from 1.8 to 2.5 thousandths.
The correction factors at the respective pressures are introduced in the shear-stress calculation.
At the pressure of 2 cm $H_2O$:

$$\text{Shear-stress} = P(r_0/s) = 2 \times 98063.8 \times 0.0025721785 = 504.4750.$$

At the pressure of 5 cm $H_2O$:

$$\text{Shear-stress} = P(r_0/s) = 5 \times 98063.8 \times 0.002046923 = 1003.645238.$$

At the pressure of 8 cm $H_2O$:

$$\text{Shear-stress} = P(r_0/s) = 8 \times 98063.8 \times 0.0018206475 = 1428.312584.$$

DETERMINATION OF THE GENERAL HEMATIC VISCOSITY

The general hematic viscosity derives from the ratio between shear-stress and shear-rate. The shear-stresses are those ones obtained and corrected and precisely:

- at the pressure of 2 cm $H_2O$: 504.4750 dyne/cm$^2$;
- at the pressure of 5 cm $H_2O$: 1003.645238 dyne/cm$^2$;
- at the pressure of 8 cm $H_2O$: 1428.212584 dyne/cm$^2$.

The shear-rates will be those ones obtained experimentally for blood at the indicated pressures.
At the pressure of 2 cm/ $H_2O$ = 504.4750 dyne/cm$^2$:

$$\text{shear-rate} = Q/t_S \cdot S.d = 0.3/t_S \times 0.204118 \times 0.0014 = 1049.812923/t_S$$

$t_S$ is the passage time of 0.3 ml of blood through a filtration surface of 0.204119 cm$^2$ which has the pores of 0.0014 cm diameter at the pressure of 2 cm/ $H_2O$.
At the pressure of 5 cm/ $H_2O$ = 1003.645238 dyne/cm$^2$:

$$\text{shear-rate} = 0.3/(t_S \times 0.204118 \times 0.0014) = 1045.812923/t_S$$

Known the three shear-stress and shear-rate determinations, one creates a diagram, wherein one puts the shear-rate on the axis of abscissas and the shear-stress on the axis of ordinates.
The represented curve has an exponential trend. The function is of the kind:

$$y = ax^b$$

which in logarithmic expression becomes:

$$\log y = b \log x + \log a$$

wherefrom, for shear-rate equal to 1 sec$^{-1}$:

$$\log y = \log a$$

therefore:

$$y = a$$

wherein:

a represents the inertial force, which expresses from the clinical point of view the erythrocyte aggregation index;
b is the slope of the line obtained in logarithmic scale, which expresses the inclination of this line.

Both parameters are useful to point out the changes with respect to the normality parameters.
Also for the exponential function one computes the significance R, which must result greater than 0.998, because otherwise either it is not an exponential function or it is a determination error.
Known the three viscosities and the respective shear-rates, one obtains the relative exponential function, which has formula:

$$y = ax^{-b}$$

which in logarithmic expression becomes:

$$\log y = -b \log x + \log a.$$

By the exponential function one may compute all the viscosities included in the range of the shear-rates of the circulatory system.

In practice, taking into account that the viscosity of blood or plasma is a viscosity relative to water, one may directly proceed taking the ratio between absolute viscosity of blood ($\eta_S$) and absolute viscosity of water ($\eta_H$), and then taking the ratio between filtration time of blood ($t_S$) and filtration time of water ($t_H$) as from the following expression:

$$\eta = \eta_S/\eta_H = P(r_0/S)/Q(t_S SDeq) / P(r_0/S)/Q/(t_H SDeq) = t_S / t_H.$$

One presumes that the correction factor (CF) to bring back the viscosity of blood or plasma to the viscosity of water set equal to 1 centipoise, is included in the determination times.

Obtained the three different viscosities, one gets the respective shear-rates by the formula:

$$\text{shear-rate} = Q / t_0 \, SDeq.$$

Therefore from the three viscosities and from the respective shear-rates one gets, by the exponential function $y = ax^{-b}$, all the viscosities at any shear-rate included in the circulatory system.

To obtain then the shear-stresses, one multiplies the shear-rates times the respective viscosities. With the obtained shear-stresses and the respective shear-rates one creates the diagram which has the trend of an exponential function from the formula $y = ax^b$ and it allows to obtain the value of the inertial force and the erythrocyte aggregation index.

PROCEDURE FOR THE DETERMINATION OF THE CORRECTION FACTORS (CF) OF THE VISCOSITY OF WATER AT 10, 13 AND 16 cm $H_2O$ PRESSURES

■  filter consisting of a porous septum, supplied by Nucleopore Corporation (California) Society
■  diameter of pores: 5 $\mu$m = 0.0005 cm
■  filtration surface: 0.0394384 cm$^2$.

Filtration has been carried out in the following conditions:

■  filtered water volume: 0.3 ml (corresponding to the passage of water from one electrode to the subsequent electrode in the graduated burette);
■  filtration pressure:
three experiments have been carried out, respectively at pressures:

- 10 cm $H_2O$ = 10 x 98063.8 dyne/cm$^2$
- 13 cm $H_2O$ = 13 x 98063.8 dyne/cm$^2$
- 16 cm $H_2O$ = 16 x 98063.8 dyne/cm$^2$.

From the three experiments the following filtration times have been obtained:

| Pressure (cm $H_2O$) | Filtration Times of 0.3 ml of water (sec) |
|---|---|
| 10 | $t'_{1H} = 1.124$ |
| 13 | $t'_{2H} = 0.873$ |
| 16 | $t'_{3H} = 0.749$ |

Pressures higher than the preceding test ones have been used because the size of the pores require a greater filtration force for the execution in relatively short times, such as to avoid erythrosedimentation processes.

The correction factor needed to bring back the viscosity of water to 1 centipoise is first obtained.

For the pressure of 10 cm $H_2O$:

$$\frac{10 \times 98063.8 \times r_0/s}{0.3/1.124 \times 0.0394384 \times 0.0005} = 1$$

wherefrom:

$$CF \times r_0/s = 0.3/1.124 \times 0.0394384 \times 0.0005 \times 10 \times 98063.8 = 0.013802711.$$

For the pressure of 13 cm $H_2O$:

$$\frac{13 \times 98063.8 \times r_0/s}{0.3/0.873 \times 0.0394384 \times 0.0005} = 1$$

wherefrom:

$$CF \times r_0/s = 0.3/0.873 \times 0.0394384 \times 0.0005 \times 13 \times 98063.8 = 0.013670594.$$

For the pressure of 16 cm $H_2O$:

$$\frac{16 \times 98063.8 \times r_0/s}{0.3/0.749 \times 0.0394384 \times 0.0005} = 1$$

wherefrom:

$$CF \times r_0/s = 0.3/0.749 \times 0.0394384 \times 0.0005 \times 16 \times 98063.8 = 0.013809253.$$

The error in the measurement of the viscosity of water at the different pressures is negligible, ranging from 0 to 8 thousandths.

The correction factors at the respective pressures are introduced in the calculation of the shear-stress of blood.

At the pressure of 10 cm $H_2O$:

$$\text{Shear-stress} = P(r_0/s) = 10 \times 98063.8 \times 0.013802711 = 135335.21775.$$

$$\text{Shear-rate} = Q/(t_S d) = 0.3 / t_{1S} \times 0.0394384 \times 0.0005 = 15213.59893/t_{1S}$$

At the pressure of 13 cm $H_2O$:

$$\text{Shear-stress} = P(r_0/s) = 13 \times 98063.8 \times 0.013670594 = 17427.67515.$$

$$\text{Shear-rate} = Q/(t_S d) = 0.3 / t_{2S} \times 0.0394384 \times 0.0005 = 15213.59893/t_{2S}$$

At the pressure of 16 cm $H_2O$:

$$\text{Shear-stress} = P(r_0/s) = 16 \times 98063.8 \times 0.013809253 = 21667.00519.$$

$$\text{Shear-rate} = Q/(t_S d) = 0.3 / t_{3S} \times 0.0394384 \times 0.0005 = 15213.59893/t_{3S}$$

Known the three shear-stresses and respective shear-rates, one creates the exponential curve $y = ax^b$ , whereby one obtains the shear-stress at 1 $sec^{-1}$ shear-rate.

Such shear-stress represents the inertial force of the filtration process, when the filtration velocity is practically zero. It is assumed as true "erythrocyte aggregation index", because, the filters having 5 μm pores (diameter lower than the red cell one), before the filtration a process of erythrocyte disaggregation is needed.

The experimentally obtained shear stresses and the respective shear rates allow to go back to the relative viscosities and to get the exponential function $y = ax^{-b}$ , which relates the viscosity with all the shear rates ranging from 1 to 400 $sec^{-1}$.

DETERMINATION OF THE CAPILLARY HEMATIC VISCOSITY

As far as the capillary hematic viscosity is concerned, the shear-rates of the capillary region in particular have to be considered, which are referred to a rest condition and to a condition of maximum circulatory activity, as in the muscular effort (25 $sec^{-1}$ minimum value and 290 $sec^{-1}$ maximum value, with 87 $sec^{-1}$ mean value).

In order to normalize the exponential curve and to obtain the equation of a line one applies the logarithms:

$$\log y = -b \log x + \log a$$

wherein for x = 1:

$$\log y = \log a$$

wherefrom:

$$y = a$$

wherein:

a represents the value of viscosity at shear-rate equal to 1 $sec^{-1}$
-b represents the slope of the line.

In practice, as already stated, the computation of the correction factor to introduce in Newton formula is not needed to obtain the viscosity relative to water, set equal to 1 centipoise, but it is sufficient to take the ratio between the filtration time of blood or plasma and the one of water at the same shear-rates to obtain the relative viscosities.

Known the three viscosities and the respective shear-rates, one proceeds getting the other viscosities at the shear rates ranging from 1 to 400 $sec^{-1}$, whereby one may compile a table. In order to go back to the shear-stress relative to the shear-rate equal to 1 $sec^{-1}$, one multiplies the relative viscosity times 1; in practice it is equivalent to the viscosity, but it is expressed in centidyne/$cm^2$.

The inertial force numerically coincides, both for the general hematic viscosity, as for the capillary hematic viscosity, with the viscosity at shear-rate equal to 1 $sec^{-1}$. In fact, remembering that:

$$\eta = P(r_0/s) \mid Q/(t_S d)$$

for shear-rate equal to 1 $sec^{-1}$:

$$\text{viscosity:} \eta = P(r_0/s) \mid 1 = \text{dyne/cm}^2 \mid 1 \text{ sec}^{-1} = \text{dyne.sec/cm}^2$$

$$\text{inertial force: } P(r_0/s) = \eta\ 1\ \text{sec}^{-1} = \text{dyne/cm}^2.$$

The only difference is in the unit, which for the shear-stress is in dyne/$cm^2$ and for the viscosity in dyne.sec/$cm^2$.

With the same procedure one gets the normality values of the general hematic viscosity and of the capillary hematic viscosity at the different shear-rates. These values are expressed by the mean with relative standard deviation.

Also for a of the exponential function, which represents for the capillary hematic viscosity the erythrocyte aggregation index, one obtains the mean values with relative standard deviation.

Finally one gets the normality values of (-b) and (log a), which represent the position and the trend of the tine obtained applying the logarithms to the exponential function.

The deviations from normality may be verified by these parameters:

- ) by variation of the a parameter of the tine equation (normal -b parameter). In this case the line of the equation is parallel to the normal line, but shifted higher or lower (the viscosity values are either all increased or all decreased at any considered shear-rates);

- ) by variation of the -b parameter (slope of the line which points out the direction and expresses the inclination angle of the line; it is given by the ratio between corresponding values on the abscissa and on the ordinate). In this case the line crosses the regression normality line in the point a. For values of -b greater than the slope of the normal line (lower in absolute value), one has viscosity values which progressively increase as the values of shear-rate increase. The minimum variability limit is for -b = 0, because in such a case the points of the line align on an axis parallel to the abscissa y = a. For -b values lower than the slope of the normal line (greater in absolute value), one has viscosity values which progressively decrease as the shear-rates increase to an unmeasurable value for which y = 0;

- ) for variations of both parameters (it is the most frequent case): 1) If a increases and -b decreases (it becomes more negative with respect to the normal) the viscosity values increase at low shear-rates, while they decrease at high shear-rates. 2) If a decreases and -b increases (it becomes less negative with respect to the normal) the viscosity values decrease at low shear-rates while they increase at high shear-rates. 3) In the case of increase of a and -b (the absolute value is decreased) the viscosity increases at any shear-rate, but in greater measure at high shear-rates. 4) In the case of decrease of a and -b (the absolute value is increased) viscosity decreases at any shear-rate, but in greater measure at high shear rates.

On the basis of the deviations from the norm of -b and a one gets the significance degree of the variation which may be "significant", "highly significant" or "weakly significant".

From what above reported it clearly results that by the method and the equipment according to the present invention one may obtain all the viscosity values included in the area of all the shear-rates of the general and capillary circulatory system as reported in the following Table II.

In said Table the normal values (n.v.) for the blood of the normal subjects, with respective standard deviation from norm, relative to the general hematic viscosity, to the capillary hematic viscosity, to the erythrocyte deformability and to the erythrocyte aggregation index are reported.

Such a Table also forms a list to use for the patients' responses. In this case the data are reported in the empty columns.

## TABLE II: Hermorheological determinations with the new method

| General hematic viscosity | | | Batch n° 727389 | | | Capillary hematic viscosity | | | Batch n° 2958 | | | Erythrocyte Deformability | | |
|---|---|---|---|---|---|---|---|---|---|---|---|---|---|---|
| Pressure Blood T. Water T. | | | 2 / 2,081 | 5 / 1,046 | 8 / 0,735 | Pressure Blood T. Water T. | | | 10 / 1,124 | 13 / 0,873 | 16 / 0,749 | | | |

| Shear-rate (1/sec) | Viscosity (mPa.s) | v.n. min (mPa.s) | v.n. max (mPa.s) | Shear-rate (1/sec) | Viscosity (mPa.s) | v.n. min (mPa.s) | v.n. max (mPa.s) | Shear-rate (1/sec) | v.n. min (%) | v.n. max (%) |
|---|---|---|---|---|---|---|---|---|---|---|
| 1 | | 21,35 | 37,16 | 1 | | | | 1 | 0,75 | 4,87 |
| 2 | | 16,95 | 27,22 | 2 | | | | 2 | 1,01 | 5,00 |
| 2,5 | | 15,73 | 24,63 | 2,5 | | | | 2,5 | 1,11 | 5,05 |
| 3 | | 14,79 | 22,70 | 3 | | | | 3 | 1,19 | 5,09 |
| 4 | | 13,42 | 19,96 | 4 | | | | 4 | 1,32 | 5,15 |
| 5 | | 12,44 | 18,08 | 5 | | | | 5 | 1,44 | 5,19 |
| 6 | | 11,69 | 16,67 | 6 | | | | 6 | 1,53 | 5,23 |
| 7 | | 11,08 | 15,57 | 7 | | | | 7 | 1,62 | 5,27 |
| 7,5 | | 10,83 | 15,10 | 7,5 | | | | 7,5 | 1,66 | 5,28 |
| 8 | | 10,59 | 14,67 | 8 | | | | 8 | 1,70 | 5,30 |
| 9 | | 10,17 | 13,93 | 9 | | | | 9 | 1,77 | 5,33 |
| 10 | | 9,80 | 13,30 | 10 | | | | 10 | 1,83 | 5,35 |
| 15 | | 8,51 | 11,13 | 15 | | | | 15 | 2,10 | 5,45 |
| 15,5 | | 8,41 | 10,97 | 15,5 | | | | 15,5 | 2,12 | 5,46 |
| 20 | | 7,69 | 9,82 | 20 | | | | 20 | 2,31 | 5,52 |
| 25 | | 7,10 | 8,92 | 25 | | 142,76 | 277,67 | 25 | 2,48 | 5,58 |
| 30 | | 6,65 | 8,25 | 30 | | 130,64 | 246,46 | 30 | 2,63 | 5,63 |
| 35 | | 6,29 | 7,72 | 35 | | 121,17 | 222,85 | 35 | 2,78 | 5,67 |
| 40 | | 5,99 | 7,30 | 40 | | 113,52 | 204,25 | 40 | 2,88 | 5,71 |
| 45 | | 5,73 | 6,95 | 45 | | 107,16 | 189,15 | 45 | 2,98 | 5,74 |
| 50 | | 5,51 | 6,65 | 50 | | 101,76 | 176,61 | 50 | 3,08 | 5,78 |
| 60 | | 5,15 | 6,17 | 60 | | 93,04 | 156,85 | 60 | 3,26 | 5,83 |
| 70 | | 4,85 | 5,80 | 70 | | 86,24 | 141,91 | 70 | 3,41 | 5,88 |
| 80 | | 4,61 | 5,49 | 80 | | 80,74 | 130,14 | 80 | 3,55 | 5,93 |
| 87 | | 4,46 | 5,31 | 87 | | 77,45 | 123,26 | 87 | 3,64 | 5,96 |
| 90 | | 4,40 | 5,24 | 90 | | 76,16 | 120,58 | 90 | 3,67 | 5,97 |
| 100 | | 4,22 | 5,03 | 100 | | 72,28 | 112,65 | 100 | 3,79 | 6,01 |
| 120 | | 3,92 | 4,69 | 120 | | 66,01 | 100,15 | 120 | 3,99 | 6,09 |
| 130 | | 3,80 | 4,54 | 130 | | 63,42 | 85,13 | 130 | 4,08 | 6,12 |
| 160 | | 3,49 | 4,20 | 160 | | 57,14 | 83,28 | 160 | 4,32 | 6,22 |
| 200 | | 3,18 | 3,86 | 200 | | 51,04 | 72,25 | 200 | 4,57 | 6,35 |
| 260 | | 2,84 | 3,51 | 260 | | 44,61 | 61,24 | 260 | 4,86 | 6,54 |
| 280 | | 2,75 | 3,42 | 280 | | | | 280 | 4,94 | 6,60 |
| 300 | | 2,57 | 3,33 | 300 | | | | 300 | 5,01 | 6,66 |
| 360 | | 2,47 | 3,12 | 360 | | | | 360 | 5,18 | 6,85 |
| 400 | | 2,36 | 3,00 | 400 | | | | 400 | 5,28 | 6,98 |
| a | | -0,4456 | -0,3440 | a | | -0,6283 | -0,4340 | a | 0,0471 | 0,2833 |
| b | | 3,0980 | 3,6000 | b | | 6,0448 | 7,3506 | b | 0,04914 | 1,51766 |
| | | | | k | | 640,368 | 2317,008 | | | |

(a = mean value of the vascular region)
(b = aggregation index)

**n.v. = normal value**

The viscosity computed at any shear-rate, which one finds in the circulatory system, also allows using the Einstein-Stokes law to refer the values of the erythrosedimentation velocity (VES) to a common reference parameter, which is the viscosity of water made equal to 1 centipoise.

Known the VES, which is get experimentally for a given unknown sedimentation force using the Gold Standard (GS) method, which uses EDTA as anticoagulant, it is possible to compute the viscosity the blood has at the same velocity and at the same shear-rate (w/d).

The shear-rate relative to the erythrosedimentation velocity is computed dividing the velocity itself in cm/sec by the inner diameter of the graduated pipette used for the determination.

From the viscosity and from $VES_{(GS)}$ it is possible to go back by Stokes law to the sedimentation force (F). In fact from:

$$VES_{(GS)} = \frac{(d_1 - d_2)2r^2 g}{9\eta}$$

one computes the sedimentation force (F):

$$F = VES_{(GS)} 9\eta$$

wherein $VES_{(GS)}$ is expressed in cm/sec and $\eta$ in centidyne.sec/cm$^2$, whereby:

$$F = (cm/sec) \ (centidyne.sec/cm2\ ) = centidyne/cm$$

wherein 1 centidyne.sec/cm$^2$ = 1 centipoise or mPa.sec.

Computed the sedimentation force one may compute VES at a viscosity equal to 1 centipoise, which is the viscosity of water ($VES_{(\eta=1)}$):

$$(VES_{(\eta=1)}) = F/9x1 \ centidyne.sec/cm^2$$

$$= (centidyne/cm)/9 \ (centidyne.sec/cm^2) = 1/9 \ cm/sec.$$

$_{(\eta=1)}$ referred to the viscosity of water, is comparable with all the other VES, because it is independent from the viscosity of the medium, which varies for the composition of blood and as a function of the sedimentation velocity itself. For practical reasons, it is expressed in cm/min.

It is a highly significant datum, because in such a way the VES expresses uniquely the resultant of the erythrocyte proaggregant forces and it is a true index of an inflammatory process.

The viscosity with the present method also allows computing the size of the erythrocyte aggregates (radius r). In fact computed the sedimentation force (F) from the product of the $VES_{(GS)}$ times the viscosity at the shear-rate of 1 sec$^{-1}$ as the shear-rate of the $VES_{(GS)}$ changes from a 0.1 sec$^{-1}$ minimum to a 1.4 sec$^{-1}$ maximum, the following equality is set:

$$F = (d_1 - d_2) \ 2r^2 g$$

wherein

$d_1 =$       density of red cells
$d_2 =$       density of the plasma
$d_1 - d_2 =$       0.0735 g/cm$^3$
$g =$       acceleration of gravity = 980.665 cm/sec$^2$.

One may also write:

$$(d_1 - d_2) \ 2r^2 = ma$$

wherein

m = mass = $(d_1 - d_2) \ 2r^2$
a = acceleration of gravity g
ma = measured in dyne, multiplied by 100 to obtain the value in centidyne, as for the force F.

The hematic viscosity ($\eta$) may be referred to the shear-rate relative to the erythrosedimentation velocity which is obtained dividing the sedimentation velocity, expressed in cm/sec, by the diameter of the sedimentation pipette,

**17**

expressed in cm; or to a shear-rate equal to 1 sec$^{-1}$, which represents the lowest shear-rate one measures in the circulatory system in all physiopathological conditions.

F, expressed in units according to the CGS system, turns out to be:

$$F = VES_{(S-R=1)}9\eta$$

$$F = centidyne.cm/cm^2$$

$$(d_1-d_2)2r^2 \ g/cm^2 = [(p_1/cm^3)-(p/cm^3)]2r^2 \ cm^2 \ 98066.5cm =$$

$$= [(p_1-p_2)/cm^3] \ [(2r^2 \ cm^2 \ 98066.5 \ cm)/cm^2] =$$

$$= (0.0735 \times 2r^2 \ cm^2 \ 98066.5 \ cm)/cm^3 \ cm^2 =$$

$$= [(0.0735 \times 2r^2 \ 98066.5 \ cm)] \ cm^2/cm^3 \ cm^2$$

wherein (0.0735 x 2r$^2$ x 98066.5 cm) is expressed in centidyne.

Therefore:

$$centidyne.cm/cm^2 = \{[(0.0735 \times 2r^2 \times 98066.5 \ cm)centidyne]cm^2\}/cm^3 \ cm^2 \ cm^2 = 0.0735 \times 2r^2 \ 98066.5$$

wherefrom getting r$^2$, one has:

$$r^2 = (centidyne \ numerical \ value) \ (no. \ of \ cm^2)/2 \times 0.0735 \times 98066.5$$

wherefrom:

$$r = \sqrt{\{[(centidyne \ numerical \ value) \ ( no. \ of \ cm^2)]/14415.7\}}$$

The erythrosedimentation velocity becomes a "thromboembolic risk" index too, whose seriousness expresses by the measure of the size of the "aggregates".

The following Example is reported for illustrative aim of the invention.

EXAMPLE 1

By the above described equipment and method the filtration times (sec) of a blood sample (blood T.) and a water sample (water T.) have been measured for the determination of the general hematic viscosity, of the capillary hematic viscosity and erythrocyte deformability as reported below.

1. Determination of the general hematic viscosity

1.1 In the following Table the filtration times, either of blood or water, are reported through the filter having pores of 0.0014 cm diameter at the respective filtration pressures:

| Pressure (cm H$_2$O) | Blood T. (sec.) | Water T. (sec.) |
| --- | --- | --- |
| 2 | 4.955 | 2.081 |
| 5 | 1.461 | 1.046 |
| 8 | 0.981 | 0.735 |

1.2 One divides the filtration time of blood at the pressure of 2 cm $H_2O$, by the filtration time of water at the same pressure and one obtains the relative viscosity value:

Viscosity relative to 2 cm $H_2O$ (mPa.s) = 4.955/2.081 = 2.3811

1.3 One divides the filtration time of blood at the pressure of 5 cm $H_2O$, by the filtration time of water at the same pressure and one obtains the relative viscosity value:

Viscosity relative to 5 cm $H_2O$ (mPa.s) = 1.461/1.046 = 1.3958

1.4 One divides the filtration time of blood at the pressure of 8 cm $H_2O$, by the filtration time of water at the same pressure and one obtains the relative viscosity value:

Viscosity relative to 8 cm $H_2O$ (mPa.s) = 0.981/0.735 = 1.3347

1.5 One divides the calculation constant equal to 1049.812923 by the filtration time of blood at the pressure of 2 cm $H_2O$ and one obtains the relative shear-rate value:

Shear-rate at 2 cm $H_2O$ (1/sec)= 1049.812923/4.955 = 211.87

1.6 One divides the calculation constant equal to 1049.812923 by the filtration time of blood at the pressure of 5 cm $H_2O$ and one obtains the relative shear-rate value:

Shear-rate at 5 cm $H_2O$ (1/sec) = 1049.812923/1.461 = 718.56

1.7 One divides the calculation constant equal to 1049.812923 by the filtration time of blood at the pressure of 8 cm $H_2O$ and one obtains the relative shear-rate value:

Shear-rate at 8 cm $H_2O$ (1/sec) = 1049.812923/0.981 = 1071.15

1.8 One multiplies the so obtained shear-rate values times the previously get viscosity values and one obtains the relative shear-stress values:

Shear-stress at 2 cm $H_2O$ (mPa.s) = 211.87 x 2.3811 = 504.475

Shear-stress at 5 cm $H_2O$ (mPa.s) = 718.56 x 1.3958 = 1003.65

Shear-stress at 8 cm $H_2O$ (mPa.s) = 1071.15 x 1.3347 = 1428.32

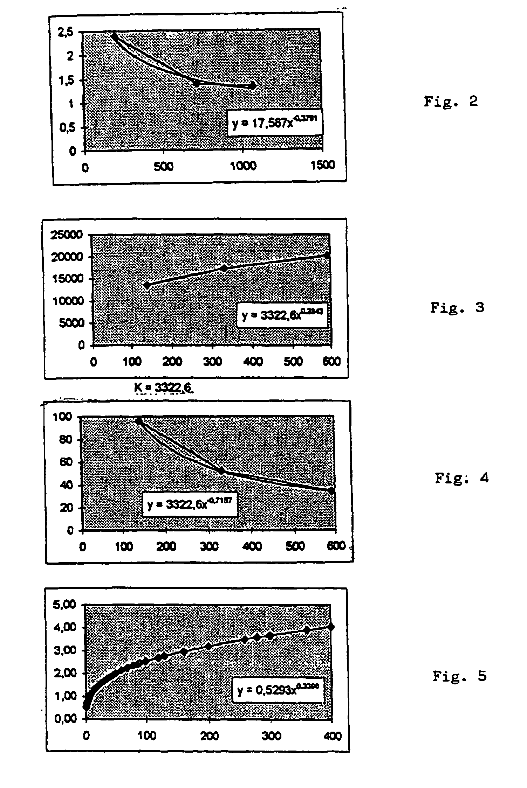

1.9 One creates a diagram putting in relation, on the ordinate (y), the three obtained viscosity values and, on the abscissa (x), the three relative shear-rate values; one obtains a curve which is the power function of the kind $y = ax^{-b}$ reported in Fig. 2.
1.10 One applies the e base logarithmic function (In) to the power function: one obtains a line with equation of the kind: y = ax + b

In(y) = -0.3761 In(x) + In(17.587)

1.11 One extrapolates from the so obtained line equation the -b and In of a values -b = -0.3761

In a = 2.8672

$$\ln(y) = 0.3761 \cdot \ln(x) + 2.8672$$

1.12 In place of x all the values of shear-rate included in the range of the circulatory system (1-2-2.5-3-4-5-6-7-7.5-8-9-10-15-15.5-20-25-30-40-45-50-60-70-80-87-90-100-120-130-160-200-260-280-300-360-400 sec$^{-1}$) are inserted: thus a Table is obtained wherein, on the left, the shear-rate values are reported and, on the right, the corresponding values of the general hematic viscosity (y) (Table no. 1 reported below).

2. Determination of the capillary hematic viscosity

2.1 In the following Table the filtration times, either of blood or water, are reported through the filter having pores of 0.0005 cm diameter at the respective filtration pressures:

| Pressure (cm $H_2O$) | Blood T. (sec.) | Water T. (sec.) |
|:---:|:---:|:---:|
| 10 | 107.804 | 1.124 |
| 13 | 45.737 | 0.873 |
| 16 | 25.74 | 0.749 |

2.2 One divides the filtration time of blood at the pressure of 10 cm $H_2O$, by the filtration time of water at the same pressure and one obtains the relative viscosity value:

$$\text{Viscosity relative to 10 cm } H_2O \text{ (mPa.s)} = 107.804/1.124 = 95.911$$

2.3 One divides the filtration time of blood at the pressure of 13 cm $H_2O$, by the filtration time of water at the same pressure and one obtains the relative viscosity value:

$$\text{Viscosity relative to 13 cm } H_2O \text{ (mPa.s)} = 45.737/0.873 = 52.390$$

2.4 One divides the filtration time of blood at the pressure of 16 cm $H_2O$, by the filtration time of water at the same pressure and one obtains the relative viscosity value:

$$\text{Viscosity relative to 16 cm } H_2O \text{ (mPa.s)} = 25.74/0.749 = 34.365$$

2.5 One divides the calculation constant equal to 15213.59893 by the filtration time of blood at the pressure of 10 cm $H_2O$ and one obtains the relative shear-rate value:

$$\text{Shear-rate at 10 cm } H_2O \text{ (1/sec)} = 15213.59893/107.804 = 141.123$$

2.6 One divides the calculation constant equal to 15213.59893 by the filtration time of blood at the pressure of 13 cm $H_2O$ and one obtains the relative shear-rate value:

$$\text{Shear-rate at 13 cm } H_2O \text{ (1/sec)} = 15213.59893/45.737 = 332.632$$

2.7 One divides the calculation constant equal to 15213.59893 by the filtration time of blood at the pressure of 16 cm $H_2O$ and one obtains the relative shear-rate value:

Shear-rate at 16 cm $H_2O$ (1/sec) = 15213.59893/25.74 = 591.049

2.8 One multiplies the so obtained shear-rate values times the previously get viscosity values and one obtains the relative shear-stress values:

Shear-stress at 10 cm $H_2O$ (mPa.s) = 141.123 x 95.911 = 13535.23

Shear-stress at 13 cm $H_2O$ (mPa.s) = 332.632 x 52.390 = 17426.802

Shear-stress at 16 cm $H_2O$ (mPa.s) = 591.049 x 34.365 = 20311.881

2.9 One creates a diagram putting in relation, on the ordinate (y), the three obtained shear-stress values and, on the abscissa (x), the three relative shear-rate values; one obtains a curve which is a power function of the kind $y = ax^{-b}$ reported in Fig. 3, wherefrom one extrapolates the value of K = erythrocyte aggregation index.

2.10 One creates a diagram putting in relation, on the ordinate (y), the three obtained viscosity values and, on the abscissa (x), the three relative shear-rate values; one obtains a curve which is a power function of the kind $y = ax^{-b}$ reported in Fig. 4.

2.11 One applies the e base logarithmic function (In) to the power function and one obtains a line with equation of the kind: y = -ax + b

$$\ln(y) = -0.7157 \ln(x) + \ln(3322.6)$$

2.12 One extrapolates from the so obtained line equation the -b and In of a values:

$$-b = -0.7157$$

$$\ln a = 8.1085$$

$$\ln(y) = -0.7157 \ln(x) + 8.1085$$

2.13 In place of x all the values of shear-rate included in the range of the circulatory system (1-2-2.5-3-4-5-6-7-7.5-8-9-10-15-15.5-20-25-30-40-45-50-60-70-80-87-90-100-120-130-160-200-260-280-300-360-400 sec$^{-1}$) are inserted: thus a Table is obtained wherein, on the left, the shear-rate values are reported and, on the right, the corresponding viscosity values (y); the values ranging from 25 to 260 sec$^{-1}$ shear-rate correspond to the values of hematic viscosity included in the capillary region (Table no. 2, reported below).

3. Calculation of erythrocyte deformability

3.1 One divides the general hematic viscosity values (14 $\mu$) ranging from 1 to 400 sec$^{-1}$ shear-rate by the respective capillary hematic viscosity values (5 $\mu$) and so one obtains the erythrocyte deformability values as in the following Table:

| Shear-rate | Viscosity 14 | Viscosity 5 | Deformability |
|---|---|---|---|
| 1 | 17.587 | 3322.600 | 0.005 |
| 2 | 13.551 | 2023.163 | 0.007 |
| | etc. | etc. | etc. |

(continued)

| Shear-rate | Viscosity 14 | Viscosity 5 | Deformability |
|---|---|---|---|
| | 40017.587 | 3322.600 | 0.005 |

3.2 One multiplies the so obtained values times 100: one obtains the erythrocyte deformability values expressed as percentage (%) as in the following Table:

| Deform. | Deform. % |
|---|---|
| 0.005 | 0.529 |
| 0.007 | 0.670 |
| etc. | etc. |
| 0.040 | 4.049 |

3.3 One creates a diagram putting in relation on the ordinate y, the obtained deformability values and, on the abscissa x, the relative shear-rate values, one obtains a curve which is a power function of the kind $y = ax^b$ as reported in Fig. 5.

3.4 One applies the e base logarithmic function (ln) to this power function and one obtains a line having an equation of the kind y = ax+b.

$$\ln(y) = 0.3396 \ln(x) + \ln(0.5293)$$

3.5 One extrapolates from the so obtained line equation the b and ln(a) values

$$b = 0.3396$$

$$\ln(a) = 0.6362$$

wherefrom

$$\ln(y) = 0.3396 \ln(x) + 0.6362$$

3.6 In place of x all the shear-rate values included in the field of the circulatory system (1-2-2.5-3-4-5-6-7-7.5-8-9-10-15-15.5-20-25-30-40-45-50-60-70-80-87-90-100-120-130-160-200-260-280-300-360-400 sec$^{-1}$) are inserted: thus a Table is obtained wherein, on the left, the shear-rate values are reported and, on the right, the corresponding values of the erythrocyte deformability (y) (Table n° 3).

Table No. 1     Table No. 2     Table No. 3

| Shear-rate (1/sec) | Viscosity (mPa.s) | Shear-rate (1/sec) | Viscosity (mPa.s) | Shear-rate (1/sec) | Deformability |
|---|---|---|---|---|---|
| 1 | 17.587 | 1 | 3322.600 | 1 | 0.529 |
| 2 | 13.551 | 2 | 2023.163 | 2 | 0.670 |
| 2.5 | 12.460 | 2.5 | 1724.537 | 2.5 | 0.723 |
| 3 | 11.634 | 3 | 1513.570 | 3 | 0.769 |
| 4 | 10.441 | 4 | 1231.923 | 4 | 0.848 |
| 5 | 9.601 | 5 | 1050.087 | 5 | 0.914 |
| 6 | 8.965 | 6 | 921.627 | 6 | 0.973 |
| 7 | 8.460 | 7 | 825.356 | 7 | 1.025 |
| 7.5 | 8.243 | 7.5 | 785.591 | 7.5 | 1.049 |
| 8 | 8.045 | 8 | 750.130 | 8 | 1.072 |
| 9 | 7.697 | 9 | 689.488 | 9 | 1.116 |
| 10 | 7.398 | 10 | 639.408 | 10 | 1.157 |
| 15 | 6.351 | 15 | 478.354 | 15 | 1.328 |
| 15.5 | 6.273 | 15.5 | 467.259 | 15.5 | 1.343 |
| 20 | 5.700 | 20 | 389.342 | 20 | 1.464 |
| 25 | 5.241 | 25 | 331.873 | 25 | 1.579 |
| 30 | 4.894 | 30 | 291.274 | 30 | 1.680 |
| 35 | 4.618 | 35 | 260.849 | 35 | 1.770 |
| 40 | 4.392 | 40 | 237.074 | 40 | 1.853 |
| 45 | 4.202 | 45 | 217.908 | 45 | 1.928 |
| 50 | 4.038 | 50 | 202.081 | 50 | 1.998 |
| 60 | 3.771 | 60 | 177.360 | 60 | 2.126 |
| 70 | 3.558 | 70 | 158.833 | 70 | 2.240 |
| 80 | 3.384 | 80 | 144.357 | 80 | 2.344 |
| 87 | 3.279 | 87 | 135.945 | 87 | 2.412 |
| 90 | 3.237 | 90 | 132.686 | 90 | 2.440 |
| 100 | 3.112 | 100 | 123.049 | 100 | 2.529 |
| 120 | 2.095 | 120 | 107.996 | 120 | 2.690 |
| 130 | 2.819 | 130 | 101.983 | 130 | 2.764 |
| 160 | 2.607 | 160 | 87.900 | 160 | 2.966 |
| 200 | 2.398 | 200 | 74.926 | 200 | 3.200 |
| 260 | 2.172 | 260 | 62.099 | 260 | 3.498 |
| 280 | 2.113 | 280 | 58.891 | 280 | 3.587 |
| 300 | 2.058 | 300 | 56.053 | 300 | 3.672 |
| 360 | 1.922 | 360 | 49196 | 360 | 3.907 |
| 400 | 1.847 | 400 | 45.623 | 400 | 4.049 |

Calculation of VES at viscosity = 1 mPa.s and of the hematic aggregates radius at 1 sec$^{-1}$ shear-rate of the Example 1

$VES_{(GS)}$ = 15 mm/h = 0.0004166 cm/sec
Diameter of the sedimentation tube = 0.2589 cm
Shear-rate = 0.0004166/0.2589 = 0.001609 sec$^{-1}$
$\eta$ at shear-rate 0.001609 sec$^{-1}$ = 197.61 centidyne.sec/cm$^2$

F = 0.0004166 x 9 x 197.61 = 0.7409 centidyne/cm

$VES_{(\eta=1)}$) = (0.7409 centidyne/cm) / [9 x (1 centidyne.sec/$cm^2$)] = 0.0823 cm/sec = 296.28 cm/h

r = $\sqrt{(0.7409/14415.7)}$ = 0.007169 cm = 0.07169 mm = 71.69 μ

In the circulatory system the lowest shear-rate is 1 $sec^{-1}$ and, therefore, introducing in the calculation the viscosity found at 1 $sec^{-1}$ shear-rate, we obtain the corresponding ($VES_{(S-R=1)}$) VES:

$$\eta \text{ at shear-rate 1 sec}^{-1} = 17.587 \text{ centidyne.sec/cm}^2$$

F = 0.0004166 x 9 x 17.587 = 0.0658 centidyne/cm

$VES_{(S-R=1)}$ = 0.0658 / 9 = 0.007316 cm/sec = 26.33 cm/h

r = $\sqrt{(0.0658/14415.7)}$ = 0.002136 cm = 0.02136 mm = 21.36 μ

Then acting according to the present invention it is possible to determine the erythrosedimentation velocity at viscosity =1 (water relative viscosity) and the radius of the hematic aggregates at the lowest shear-rate of the circulatory system too.

1 dyn/$cm^2$ = 0,1 Pa

1 cm $H_2O$ = 98,1 Pa

## Claims

1. Method for the determination of the general hematic viscosity with reference to the viscosity of water, **characterised in that** said general hematic viscosity is determined by the measurement of the times of passage of the liquid under examination, blood or water, through a multipore filter having pores of diameter ranging from 12 to 16 μ acting at a pressure ranging from 2 to 8 cm $H_2O$.

2. Method for the determination of the capillary hematic viscosity, with reference to the viscosity of water, **characterised in that** said capillary hematic viscosity is determined by the measurement of the times of passage of the liquid under examination, blood or water, through a multipore filter having pores of diameter ranging from 4 to 6 μ acting at a pressure ranging from 10 to 16 cm $H_2O$.

3. Method as claimed in claim 1, **characterised in that** said general hematic viscosity is measured at three different pressures, 2, 5 and 8 cm $H_2O$ respectively.

4. Method as claimed in claim 2, **characterised in that** said capillary hematic viscosity is measured at three different pressures, 10, 13 and 16 cm $H_2O$ respectively.

5. Equipment for the determination of the general hematic viscosity and the capillary hematic viscosity, with reference to the viscosity of water, consisting of a multipore filter (5), a syringe (7) to feed the liquid to be examined (blood or water), a glass burette (1) connected downstream of said filter, three electrodes, (2), (3) and (4) inserted in said burette (1) allowing to determine the time during which the liquid front passes from one electrode to the subsequent one and then to measure the time of passage of the liquid through the filter, a manometer (9) and (10) connected upstream of said filter and suitable to produce a negative pressure to obtain the passage of said liquid from said burette through said filter.

6. Equipment as claimed in claim 5, **characterised in that** said multipore filter (5) consists of pores having diameter ranging from 12 to 16 μ for the determination of the general hematic viscosity and of pores having diameter ranging from 4 to 6 μ for the determination of the capillary viscosity.

## Patentansprüche

1. Verfahren zur Bestimmung der allgemeinen Blutviskosität bezüglich der Viskosität von Wasser, **dadurch gekennzeichnet, dass** die allgemeine Blutviskosität durch die Messung bestimmt wird, wie oft die zu prüfende Flüssigkeit, nämlich Blut oder Wasser, durch ein Multiporenfilter hindurch gelangt, das Poren mit einem Durchmesser im Bereich von 12 bis 16 μ besitzt und bei einem Druck arbeitet, der im Bereich von 2 bis 8 cm $H_2O$ liegt.

2. Verfahren zur Bestimmung der Kapillarblutviskosität bezüglich der Viskosität von Wasser, **dadurch gekennzeich-**

**net, dass** die Kapillarblutviskosität durch die Messung bestimmt wird, wie oft die zu prüfende Flüssigkeit, nämlich Blut oder Wasser, durch ein Multiporenfilter hindurch gelangt, das Poren mit einem Durchmesser im Bereich von 4 bis 6 μ besitzt und bei einem Druck arbeitet, der im Bereich von 10 bis 16 cm $H_2O$ liegt.

3. Verfahren nach Anspruch 1, **dadurch gekennzeichnet, dass** die allgemeine Blutviskosität bei drei verschiedenen Drücken, nämlich 2, 5 bzw. 8 cm $H_2O$ gemessen wird.

4. Verfahren nach Anspruch 2, **dadurch gekennzeichnet, dass** die Kapillarblutviskosität bei drei verschiedenen Drücken, nämlich 10, 13 bzw. 16 cm $H_2O$ gemessen wird.

5. Ausstattung zur Bestimmung der allgemeinen Blutviskosität und der Kapillarblutviskosität bezüglich der Viskosität von Wasser, mit einem Multiporenfilter (5), einer Spritze (7), um die zu prüfende Flüssigkeit (Blut oder Wasser) zuzuführen, einer Glasbürette (1), die unterstromig des Filters verbunden ist, drei Elektroden (2), (3) und (4), die in die Bürette (1) eingesetzt sind und ermöglichen, die Zeit zu bestimmen, während der die Flüssigkeitsfront von einer Elektrode zu der nachfolgenden gelangt, und dann die Zeit des Durchgangs der Flüssigkeit durch das Filter zu messen, und einem Druckmesser (9) und (10), der oberstromig des Filters verbunden und geeignet ist, um einen negativen Druck zu erzeugen und damit den Durchgang der Flüssigkeit von der Bürette durch das Filter zu erhalten.

6. Ausstattung nach Anspruch 5, **dadurch gekennzeichnet, dass** das Multiporenfilter (5) Poren mit einem Durchmesser im Bereich von 12 bis 16 μ zur Bestimmung der allgemeinen Blutviskosität und Poren mit einem Durchmesser im Bereich von 4 bis 6 μ für die Bestimmung der Kapillarviskosität umfasst.

**Revendications**

1. Procédé pour la détermination de la viscosité hématique générale par référence à la viscosité de l'eau, **caractérisé en ce que** ladite viscosité hématique générale est déterminée par la mesure des temps de passage du liquide sous examen, sang ou eau, à travers un filtre multipore ayant des pores d'un diamètre allant de 12 à 16 μ agissant à une pression allant de 2 à 8 cm $H_2O$.

2. Procédé pour la détermination de la viscosité hématique capillaire, par référence à la viscosité de l'eau, **caractérisé en ce que** ladite viscosité hématique capillaire est déterminée par la mesure des temps de passage du liquide sous examen, sang ou eau, à travers un filtre multipore ayant des pores d'un diamètre allant de 4 à 6 μ agissant à une pression allant de 10 à 16 cm $H_2O$.

3. Procédé tel que revendiqué à la revendication 1, **caractérisé en ce que** ladite viscosité hématique générale est mesurée à trois pressions différentes, 2, 5 et 8 cm $H_2O$, respectivement.

4. Procédé tel que revendiqué à la revendication 2, **caractérisé en ce que** ladite viscosité hématique capillaire est mesurée à trois pressions différentes, 10, 13 et 16 cm $H_2O$, respectivement.

5. Dispositif pour la détermination de la viscosité hématique générale et de la viscosité hématique capillaire, par référence à la viscosité de l'eau, comprenant un filtre multipore (5), une seringue (7) pour amener le liquide à examiner (sang ou eau), une burette de verre (1) reliée à l'aval dudit filtre, trois électrodes (2), (3) et (4) insérées dans ladite burette (1) en permettant de déterminer le temps pendant lequel le front de liquide passe d'une électrode à la suivante et de mesurer ensuite le temps de passage du liquide à travers le filtre, un manomètre (9) et (10) relié à l'amont dudit filtre et approprié pour produire une pression négative afin d'obtenir le passage dudit liquide depuis ladite burette à travers ledit filtre.

6. Dispositif tel que revendiqué à la revendication 5, **caractérisé en ce que** ledit filtre multipore (5) comprend des pores ayant un diamètre allant de 12 à 16 μ pour la détermination de la viscosité hématique générale et de pores ayant un diamètre allant de 4 à 6 μ pour la détermination de la viscosité capillaire.

FIG 1

Fig. 2

Fig. 3

Fig. 4

Fig. 5